# EUROPEAN PATENT APPLICATION

(11) **EP 4 685 677 A1**
(43) Date of publication of application: **28.01.2026**
(21) Application number: 24382820.9
(22) Date of filing: 25.07.2024
(51) Int. Cl.: G06F 21/34, G06F 21/36, G06F 21/64, H04L 9/32, H04L 9/40

(54) **AN APPARATUS AND PROCESS FOR VERIFYING ELECTRONIC RECORDS**

(71) Applicant: SITA Switzerland Sàrl, 1216 Cointrin Geneva (CH)
(72) Inventor: FAVRE, Robin, 1216 Geneva (CH); CHOW, Renee, 08005 Barcelona (ES); BRITO, Joao Paulo, 1216 Geneva (CH)
(74) Representative: Reddie & Grose LLP

(57) **Abstract**

An apparatus is provided for verifying cryptographically signed user electronic records including credentials according to multiple credential standards. A cryptographic proof request is generated to include proof requests for the respective credential standards and sent to an electronic device. The response is a cryptographic proof response that can be decoded in accordance with a first credential standard to obtain data for the first credential, an associated proof, and a proof response for a second credential standard. The second credential standard may then be decoded in accordance with a second credential standard to obtain data for second credential and an associated proof. The respective data sets can then be verified using their respective proofs and verification results determined.

## Description

### FIELD OF THE INVENTION

This application relates to an apparatus for verifying record documents associated with a user, in particular an apparatus for verifying cryptographically signed electronic records that comprise multiple credentials, e.g. credentials corresponding to different credential standards.

### BACKGROUND OF THE INVENTION

Record documents may include licences or certificates, and corresponding logs, such as pilot licences, boatmasters' licences, driving licences and the like, or record documents identifying or authorising individuals and/or their skills or competencies. For example, the record document may identify an engineer certified to carry out maintenance and repairs to particular systems, or it may identify an individual's access levels to restricted areas.

These licences, logs, and other record documents are traditionally issued in a printed paper or plastic form for manual visual verification by an inspector as required. However, it can be difficult for third parties to reliably authenticate these record documents, particularly where record documents having different formats / characteristics may be issued by respective national authorities. Paper or plastic documents may become out of date, for example if a licence endorsement or log update occurs between issuance of the plastic or paper documents and their standard expiry term.

As such, there is a desire to transition such record documents to electronic versions that can be maintained up to date and stored or transferred electronically for ease of access and reliable authentication; however, it can be seen that the storage of record documents in electronic form actually opens up new possibilities for malicious actors to tamper with existing electronic records, or to create new falsified electronic records. Furthermore, issues may arise if different issuing authorities use different digitally verifiable credential standards, thus preventing interoperability.

The applicant has appreciated that it would be desirable to provide a method and system for handling electronic record documents that can be reliably verified while maintaining high levels of interoperability between different electronic record document issuers.

### SUMMARY OF THE INVENTION

The invention is defined in the independent claims to which reference should now be directed. Advantageous features are set out in the dependent claims.

In a first aspect, the present disclosure relates to an apparatus for verifying a user electronic record, wherein the user electronic record is a cryptographically signed electronic record generated by an issuing authority that comprises a first credential and a second credential. The apparatus comprises an input configured to receive an indication of one or more first fields of the first credential and an indication of one or more second fields of the second credential to be verified; a processor configured to generate a cryptographic proof request, the cryptographic proof request including a first proof request for the one or more first fields and a second proof request for the one or more second fields; a communications module configured to send the cryptographic proof request to an electronic device that stores the user electronic record, and configured to receive a cryptographic proof response from the electronic device in response; and an output configured to output a first verification result and a second verification result.

The processor is further configured to: decode the cryptographic proof response in accordance with a first credential standard associated with the first credential to obtain data for the one or more first fields, a first proof associated with the one or more first fields, and a second proof response; verify the data for the one or more first fields using the first proof and a first public key associated with the issuing authority and determining the corresponding first verification result; decode the second proof response in accordance with a second credential standard associated with the second credential to obtain data for the one or more second fields and a second proof; and verify the data for the one or more second fields using the second proof and a second public key associated with the issuing authority and determining the corresponding second verification result.

In this manner, the first aspect advantageously enables the issuance and verification of electronic records that simultaneously incorporate different credential standards without breaking compliance with a given credential standard, which may be an industry agreed standard for example. This in turn enables industry agreed credential standards to be combined with features of alternative credential standards.

Optionally, the cryptographic proof request may include the second proof request as optional data within the first proof request. Optionally, the first public key and the second public key may be the same. This advantageously simplifies the public key management required for the verification process.

Optionally, the cryptographic proof request may further include a third proof request for one or more third fields corresponding to a third credential, and wherein the processor is further configured to: obtain a third proof response by decoding the cryptographic proof response; decode the third proof response in accordance with a third credential standard associated with the third credential to obtain data for the one or more third fields and a third proof; and verify the data for the one or more third fields using the third proof and a third public key associated with the issuing authority and determining a corresponding third verification result; the output being configured to output the third verification result. This advantageously provides a mechanism for more than two credential standards to be combined.

Optionally, the output may comprise a display, and the output may be configured to provide the indication of the verification result as a visual indication output to the display. Optionally, the user electronic record may be an electronic pilot licence, and the electronic device may be a pilot device.

In a second aspect, the present disclosure relates to a system for verifying a user electronic record, wherein the user electronic record is a cryptographically signed electronic record generated by an issuing authority that comprises a first credential and a second credential, the system comprising: an apparatus according to the first aspect and an electronic device that stores the user electronic record. The electronic device comprises: a data store configured to store the first credential and the second credential; a further input configured to receive the cryptographic proof request; a further processor figured to decode the cryptographic proof request, obtain relevant data for the second credential, generate the second proof and the second proof response in accordance with the second credential standard associated with the second credential, obtain relevant data for the first credential, and generate the first proof and the cryptographic proof response in accordance with the first credential standard associated with the first credential, wherein the cryptographic proof response comprises the relevant data for the first credential, the first proof, and the second proof response; and a further output configured to send the cryptographic proof response to the input of the apparatus.

In a third aspect, the present disclosure relates to a method for verifying a user electronic record, wherein the user electronic record is a cryptographically signed electronic record generated by an issuing authority that comprises a first credential and a second credential. The method comprises: receiving, at an input of a verification device, an indication of one or more first fields of the first credential and an indication of one or more second fields of the second credential to be verified; generating, by a processor, a cryptographic proof request, the cryptographic proof request including a first proof request for the one or more first fields and a second proof request for the one or more second fields; and sending, by a communications module of the verification device, the cryptographic proof request to an electronic device that stores the user electronic record.

The method further comprises receiving a cryptographic proof response from the electronic device in response; decoding, by the processor, the cryptographic proof response in accordance with a first credential standard associated with the first credential to obtain data for the one or more first fields, a first proof associated with the one or more first fields, and a second proof response; verifying, by the processor, the data for the one or more first fields using the first proof and a first public key associated with the issuing authority and determining a corresponding first verification result; decoding, by the processor, the second proof response in accordance with a second credential standard associated with the second credential to obtain data for the one or more second fields and a second proof; verifying, by the processor, the data for the one or more second fields using the second proof and a second public key associated with the issuing authority and determining a corresponding second verification result; and outputting, by an output of the verification device, the first and second verification results.

In this manner, the method of the third aspect advantageously enables the issuance and verification of electronic records that simultaneously incorporate different credential standards without breaking compliance with a given credential standard, which may be an industry agreed standard for example. This in turn enables industry agreed credential standards to be combined with features of alternative credential standards.

Optionally, the cryptographic proof request includes the second proof request as optional data within the first proof request. Optionally, the first public key and the second public key are the same.

Optionally, the cryptographic proof request further includes a third proof request for one or more third fields corresponding to a third credential, the decoding of the cryptographic proof response further obtains a third proof response, and the method further comprises: decoding, by the processor, the third proof response in accordance with a third credential standard associated with the third credential to obtain data for the one or more third fields and a third proof; verifying, by the processor, the data for the one or more third fields using the third proof and a third public key associated with the issuing authority and determining a corresponding third verification result; and outputting, by an output of the verification device, the third verification result.

Optionally, outputting the verification result comprises outputting the indication of the verification result as a visual indication on a display. Optionally, the user electronic record is an electronic pilot licence, and the electronic device is a pilot device.

Optionally, a further processor of the electronic device decodes the cryptographic proof request; obtains relevant data for the second credential; generates the second proof and the second proof response in accordance with the second credential standard associated with the second credential; obtains relevant data for the first credential; and generates the first proof and the cryptographic proof response in accordance with the first credential standard associated with the first credential, wherein the cryptographic proof response comprises the relevant data for the first credential, the first proof, and the second proof response.

In a fourth aspect, the present disclosure relates to an apparatus for generating a user electronic record, wherein the user electronic record is a cryptographically signed electronic record comprising a first credential and a second credential. The apparatus comprises: an input configured to receive first credential data and second credential data; a processor configured to generate a cryptographically signed second credential in accordance with a second credential standard associated with the second credential, the second credential including the second credential data; to generate a cryptographically signed first credential in accordance with a first credential standard associated with the first credential, the first credential including the first credential data and the second credential; and to generate the user electronic record comprising the first credential; and an output configured to output the user electronic record to an electronic device.

Optionally, the first credential further includes first additional information relating to the first credential standard, and the second credential further includes second additional information relating to the second credential standard

In a fifth aspect, the present disclosure relates to a method for generating a user electronic record, wherein the user electronic record is a cryptographically signed electronic record comprising a first credential and a second credential. The method comprises: receiving, at an input of a user electronic record issuing device, first credential data and second credential data; generating, by a processor of the user electronic record issuing device, a cryptographically signed second credential in accordance with a second credential standard associated with the second credential, the second credential including the second credential data; generating, by the processor, a cryptographically signed first credential in accordance with a first credential standard associated with the first credential, the first credential including the first credential data and the second credential; generating, by the processor, the user electronic record comprising the first credential; and sending, from an output of the user electronic record issuing device, the user electronic record to an electronic device.

Optionally, the first credential further includes first additional information relating to the first credential standard, and the second credential further includes second additional information relating to the second credential standard.

### BRIEF DESCRIPTION OF THE DRAWINGS

Embodiments of the invention will now be described, by way of example only, and with reference to the accompanying drawings, in which:
Figure 1 is a schematic representation of a system according to one embodiment;
Figures 2a and 2b form a flow diagram showing the steps performed by another embodiment;
Figure 3 is a graphical representation of a Digitally Verifiable Credential comprising a secondary credential;
Figure 4 is a graphical representation of a Digitally Verifiable Credential comprising two secondary credentials;
Figure 5 is a graphical representation of a credential proof request;
Figure 6 is a graphical representation of a credential proof response;
Figure 7 is a flow diagram showing the steps performed by another embodiment for verifying a user electronic record; and
Figure 8 is a flow diagram showing the steps performed by another embodiment for generating a user electronic record.

### DETAILED DESCRIPTION

An inspector may desire to review an individual's electronic record document, for example to authenticate that an individual is properly qualified for a given activity, or access to a given area. Where the inspector needs to confirm that the record document stored on a user / record holder's device has not been tampered with or falsified, an inspector may use their own device to interrogate an online database administered by the authority that issued the record document. In some situations, the inspector may be dealing with record documents issued by a wide variety of issuing authorities, for example by corresponding national authorities in many different countries, and accordingly may require some information from the record holder in order to locate and interrogate the online database of the correct issuing authority for the correct user or individual.

This process may still be open to tampering by the user, for example by directing the inspector to the incorrect record at the issuing authority database, or directing the inspector to a fraudulent database comprising falsified record documents. Furthermore, the inspector may not be completely familiar with the official format of (or even the language used in) such record documents. Moreover, this process would require the inspector device to have an active internet connection at the time of performing any verification of the user's record documents - without such an internet connection, the inspector would be forced to rely on an unverified electronic record document presented by the user, which may have been tampered with or falsified.

In order to overcome such drawbacks, an apparatus and system is described below for verifying a plurality of user electronic records, wherein each user electronic record is a cryptographically signed electronic record, that can perform reliable verification even when the verification apparatus does not have access to the internet. Advantageously, the apparatus enables the authenticity of an electronic record stored on a user device to be independently inspected and reliably verified in an offline environment whilst maintaining a high level of privacy control for the subject of the electronic records. This is particularly valuable for inspectors working on remote outstations or areas where network connectivity is limited and may not be available at the time of inspection of the user electronic record.

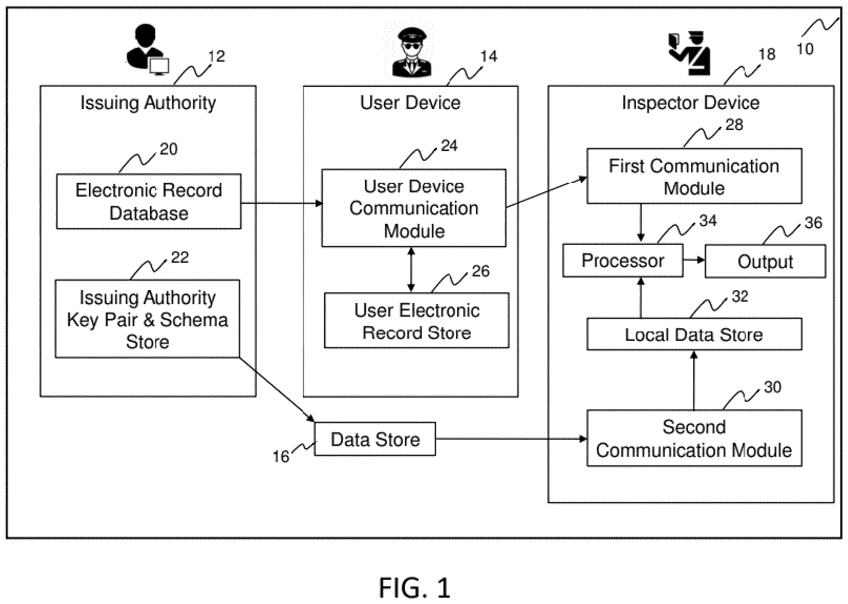

Figure 1 is a schematic representation of a system 10 according to an embodiment comprising an issuing authority 12, a user device 14, a data store 16, and an inspector device 18. The issuing authority 12 comprises an electronic record database 20 that stores copies of electronic records issued to users by the issuing authority 12. Record documents may include licences or certificates and corresponding logs, such as pilot licences, boatmasters' licence, driving licences and the like, or record documents identifying or authorising individuals and/or their skills or competencies. For example, the record document may identify an engineer certified to carry out maintenance and repairs to particular systems, or it may identify an individual's access levels to restricted areas.

These logs could include information such as the user's relevant medical records, the number of hours that the user has performed the licenced activity (e.g. hours flown, sailed or driven) for within a given time frame, the types of vehicle the licence covers (e.g. aircraft type, watercraft type, road vehicle type or train type), specific skills accredited to the user and/or languages spoken by the user.

In the following description, the use case of electronic pilot licences will be discussed, but it will be appreciated that all of the following teaching applies equally to other electronic records, including pilot logs, boatmasters' licences, driving licences, other electronic personnel licences and the like. Similarly, other airport use cases may include electronic record documents that certify an individual's skills or competencies, such as the particular aircraft or other systems that an engineer is certified to carry out maintenance and repairs on. Alternatively, the electronic record document may identify access permissions allowing the individual to access certain restricted areas, for example enabling baggage handlers or security staff to enter the baggage handling areas etc. of an airport.

The electronic pilot licences are cryptographically signed by the issuing authority using private-public key pair cryptography in the below description. The electronic pilot licence is signed by the issuing authority using a given private key (or signing key) and the signed version is stored in the electronic record database 20. In one example, this may be in the form of a signed barcode. The electronic pilot licence may include a field indicating the identity of the issuing authority or a specific entity signing for the issuing authority, and accordingly this may link the cryptographically signed electronic pilot licence with the relevant public key to be used for later verification. Where an issuing authority uses multiple private-public key pairs, the field preferably uniquely identifies the particular key pair used for that electronic pilot licence

The corresponding private-public key pair for the particular electronic pilot licence may be privately stored in the issuing authority key pair and schema store 22 along with a schema corresponding to the electronic pilot licence.

The schema is a machine-readable definition of the semantics of the electronic pilot licence's data structure and defines the attributes used in one or more identity claims, such as those forming the electronic pilot licence. The schema, public key, electronic pilot licence and corresponding user / pilot may be connected by one or more decentralised identifiers (DIDs). A DID is an identifier that enables verifiable, decentralized digital identity matching that is decoupled from centralized registries, identity providers, and certificate authorities. In this manner, the DID is specific between the two parties and cannot be used to link the user to other identifying information held by other authorities. In some implementations, the DID may be associated with a decentralised identity document (DID document), which includes cryptographic material such as the corresponding public key.

The signed electronic pilot licence is then transmitted from the issuing authority to the user device 14 associated with the user or individual to whom the electronic pilot licence relates. The user device 14 may comprise a user device communication module 24 for communicating with other devices or systems, such as the issuing authority 12 systems or an inspector device 18. This user device communication module 24 may comprise a plurality of communication means for transmitting and receiving data over a wide variety of data channels, such as radio frequency communications (including Wi-Fi (RTM) and Bluetooth (RTM)) and optical communications (including free space optical communications).

The user device 14 obtains the signed electronic pilot licence from the issuing authority system 12 via the user device communication module 24 and then stores this signed electronic pilot licence in a user electronic record store 26 for subsequent retrieval. The mechanism for transmission may vary from one issuing authority to another. In one example, the user device 14 may connect to the issuing authority system 12 via a cryptographically secure connection formed using a Hyperledger Aries invite, which is a base 64 encoding of JSON invite. An example of this is shown below:

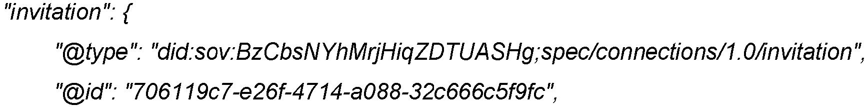

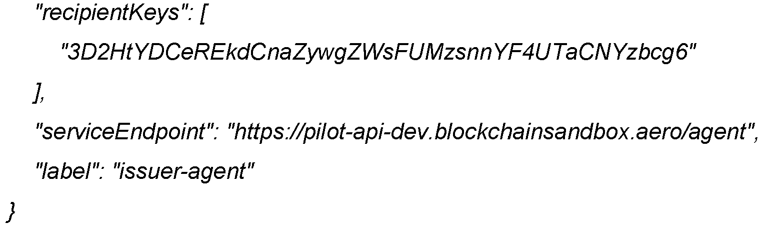

Once the user device 14 has received the invitation, it may initiate a connection handshake with the issuing authority in accordance with the Hyperledger Aries connection protocol. This connection may be initiated via a mediator to ensure that messages get routed correctly to the user device 14 even when the user device has intermittent connectivity and/or a varying IP address throughout the session.

The transmission of the electronic pilot licence from the issuing authority system 12 to the user device 14 may be in response to a request sent from the user device 14 to the issuing authority system 12 (for example by navigating to / logging in to an online portal for download), or alternatively the issuing authority system 12 may distribute the electronic pilot licence via a push mechanism to the user device 14 using one or more known techniques. The electronic pilot licence stored in the user electronic record store 26 preferably includes both the plain text representation of the electronic pilot licence and also the corresponding cryptographic proof, with these elements being cryptographically tied together such that the whole electronic pilot licence credential will be deemed to be invalid even if only one of the elements is altered. Preferably, the electronic pilot licence also includes the DID identifying the issuing authority and the relevant public key from the private-public key pair.

In order to further protect the private or otherwise personally identifying information contained in the electronic pilot licence, the cryptographic proof may be in the form of a zero knowledge proof.

The issuing authority may also publish the public keys and schema for each particular electronic pilot licence to the data store 16. It will be appreciated that a given private-public key pair and/or schema may be used for more than one electronic pilot licence by the issuing authority. For example, the private-public key pair may be specific to a given employee of the issuing authority and as such may be used in all electronic records issued by the given employee, or alternatively all electronic records issued by the given employee within a given time period. The schema might be fixed for one issuing authority, but it will be appreciated that differing schemas may be used by different issuing authorities and the inclusion of the schema information enables interpretation of the electronic pilot licence attributes as well as verifying that the electronic pilot licence has been issued in accordance with an approved schema. In one embodiment, this data store 16 may be implemented as a blockchain that is accessible by the one or more inspector devices 18.

The inspector device 18 may be any mobile computing device that comprises a first communication module 28, a second communication module 30, a local data store 32, a processor 34, and an output 36. It will be appreciated that the first communication module 28 and the second communication module 30 may be integrated into a single inspector device communication module that is able to communicate via one or more communication modes. In an embodiment, the inspector device 18 is controlled by someone authorised to review and verify the authenticity of an electronic pilot licence stored on a user device 14.

The second communication module 30 of the inspector device 18 may be configured to communicate with the data store 16. If the inspector device 18 determines that the data store 16 is accessible, via the second communication module 30, then the inspector device 18 may read the current public key and schema data stored on the data store 16. This data may then be cached by the inspector device 18 in the local data store 32 of the inspector device 18. This caching may be performed in response to a manual instruction from the inspector, or automatically (for example periodically) when the data store 16 is accessible by the inspector device 18 in order to maintain an up-to-date cached data set of public keys and trusted schemas at the local data store 32. This state of access to the data store 16 may be considered to be a first mode of operation for the inspector device 18.

A second mode of operation for the inspector device 18 may be when the data store 16 is not accessible by the inspector device 18, via the second communication module 30 nor by any other means. In this second mode of operation, it is still possible for the inspector device 18 to perform a verification of an electronic pilot licence stored on a user device 14. In this mode of operation, it can be assumed that the inspector device does not have internet access / connectivity, rather than the data store 16 simply being offline or the service otherwise being down.

The first obstacle to be overcome is that the inspector device 18 must be able to communicate with the user device 14 so that the inspector device can obtain information about the electronic pilot licence to be verified. This is achieved by using the first communication module 28 of the inspector device 18 and the user device communication module 24 of the user device 14 to enable direct communication between the respective devices.

This communication channel may be achieved over any suitable technology, for example Bluetooth (RTM), Near-Field-Communication, Wi-Fi Direct (RTM), Air Drop (RTM) or by encoding data in a visual machine readable format such as a barcode. The use of visually encoded data advantageously provides a direct communication path between the devices without requiring any hardware functionality other than a camera and a display, which would typically be present in even basic mobile devices. This communication channel may be used to send the electronic pilot licence along with a corresponding credential proof to be verified by the inspector device 18.

Once received by the inspector device, the details of the electronic pilot licence may be displayed or otherwise communicated to the inspector in some manner. The inspector device 18 may be configured to display the electronic pilot licence in a format that differs from the format as issued by the issuing authority, for example the fields and data may be rearranged and/or translated into a language set by the inspector device. This advantageously enables the inspector device to present the electronic pilot licence details in a consistent format, even when the original formats of the electronic pilot licences issued by differing issuing authorities may vary. This advantageously enables the inspector using the inspector device to more quickly review details presented in electronic pilot licences from a variety of jurisdictions.

In this manner, the electronic pilot licence, or other issued credential, may be recognised and trusted by a wide range of parties across multiple airports and/or across multiple states and governments. This solves a significant challenge in the industry regarding the acceptance of, and trust in, a credential issued in one country or by a given company / authority by other companies / authorities in the same or other countries.

In one implementation of the present disclosure, one or more two-dimensional barcodes such as QR codes may be used by displaying the barcode on a display of the user device 14, which can then be read by the inspector device using a first communication module 28 comprising a camera or other imaging device / sensor. In this manner, the communication and verification procedure may be initiated by the user of the user device 14 and the establishment of the communication channel is greatly simplified because no handshaking mechanism between the two devices is required.

If the volume of data regarding the electronic pilot licence to be communicated from the user device 14 to the inspector device 18 is too large to fit in a single barcode, then multiple barcodes may be used. The multiple barcodes may be animated on a display of the user device 14 so that the imaging sensor of the first communication module 28 may view each of the barcodes in turn, which can then be decoded and the transmitted data reconstructed by the processor 34 of the inspector device 18.

Once the electronic pilot licence and proof have been reconstructed by the inspector device 18 from the transmitted data, the processor extracts the identifier from the transmitted data to ascertain the schema and public key corresponding to the received electronic pilot licence. This schema and public key should be included in the cached data of the local data store 32. Using the schema definition of the electronic pilot licence, the data may be read and the processor may operate on the cryptographic proof (for example a digital signature of the electronic pilot licence data) with the ascertained cryptographic public key in accordance with standard private-public key cryptography techniques.

In this manner, the inspector device does not need to call the issuing authority system, nor even the data store 16, at the time of performing the verification of the electronic pilot licence credential presented by the user device 14. This not only enables the verification to be performed offline, but also improves the user's privacy since removing the need to access the licence information on demand means that the issuing authority (as well as other third parties) cannot infer further private information about the user, such as the timing, regularity and location of inspections of the user's electronic pilot licence by tracking or otherwise correlating such data access.

Because the data store 16 only stores and shares the public keys and schemas associated with the electronic pilot licence or other electronic record, no personally identifying information is stored in the data store 16. The user's personally identifying information resides in the electronic pilot licence itself, which is stored privately by the issuing authority system 12 and on the user's personal user device 14. The user may then determine whether to provide this information to a third party, such as the inspector device 18. In this manner, the user is in control of their own private data.

When the processor 34 of the inspector device 18 has determined a verification result for the transmitted electronic pilot licence, the result may be output on a display of the inspector device, or by an audible indication of the verification result etc.

The public keys cached on the inspector device may be associated with an expiry time. In this case, the processor 34 may also determine whether a public key cached in the local data store 32 has expired prior to performing the cryptographic verification of the electronic pilot licence proof and a corresponding result may be indicated in the output. In this manner issuing authority private-public key pairs may be refreshed and any compromised private keys may be removed from use, thus supporting improved cryptographic key management and revocation.

In one example of the present disclosure, the cryptographically signed electronic pilot licence (or other electronic record) may be signed by the issuing authority using one of a digital signature, a cryptographic hash, or a zero-knowledge proof.

In a further example of the present disclosure, the issuing authority may cause the electronic pilot licence (or other electronic record document) to be cryptographically linked to the specific user device 14, or alternatively to an electronic wallet associated with the user of the user device 14. In this manner, the cryptographic proof may be tied to the electronic wallet and/or the user device 14 such that the electronic pilot licence would be identified as being invalid if it was copied to another digital wallet or user device respectively. This advantageously further improves the security of the electronic pilot licence and the robustness of the inspection / verification procedure. This could be achieved by the user providing the issuing authority with an identification of the electronic wallet or user device 14 that the electronic pilot licence should be sent to in advance of the creation of that electronic pilot licence credential.

It will be appreciated that, while the above system is particularly beneficial for verification of electronic records in the second mode, i.e. where there is no internet access, the corresponding method may also be used when internet access is available.

Alternatively, a different mechanism may be used where the inspector device 18 is in communication with a user device 14 during an online mode. For example, the communication may still be initiated by the user device 14 presenting a QR code to an imaging sensor of the inspector device 18; however, this QR code could encode an Aries connection invitation as described earlier. Once the QR code has been scanned by the inspector device, a secure communication channel may be formed over a cellular connection (e.g. 4G) or a Wi-Fi connection between the user device 14 and the inspector device 18.

Upon connection, the inspector device 18 may issue a proof request to the user device 14. This proof request may be based on the relevant electronic pilot licence schema and may specify only a subset of the available fields, for example identifying a certain selection of fields relating to a certain schema issued by a certain issuing authority. If the user electronic record store 26 of the user device 14 comprises an electronic pilot licence that matches the request then the corresponding proof will be sent to the inspector device 18 for verification. The processor 34 of the inspector device 18 may then verify the electronic pilot licence in accordance with the Aries verification protocol as well as the schema and corresponding decentralised ID stored in the data store 16.

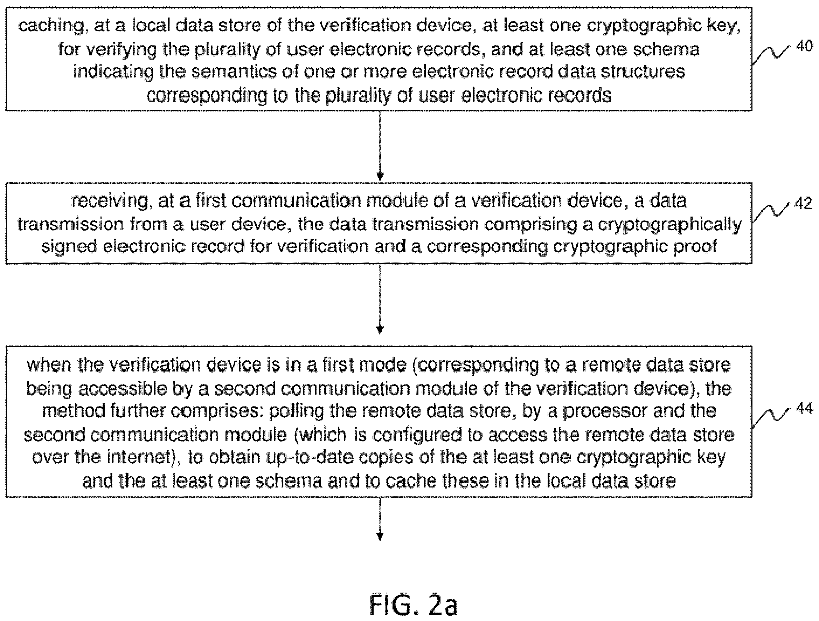

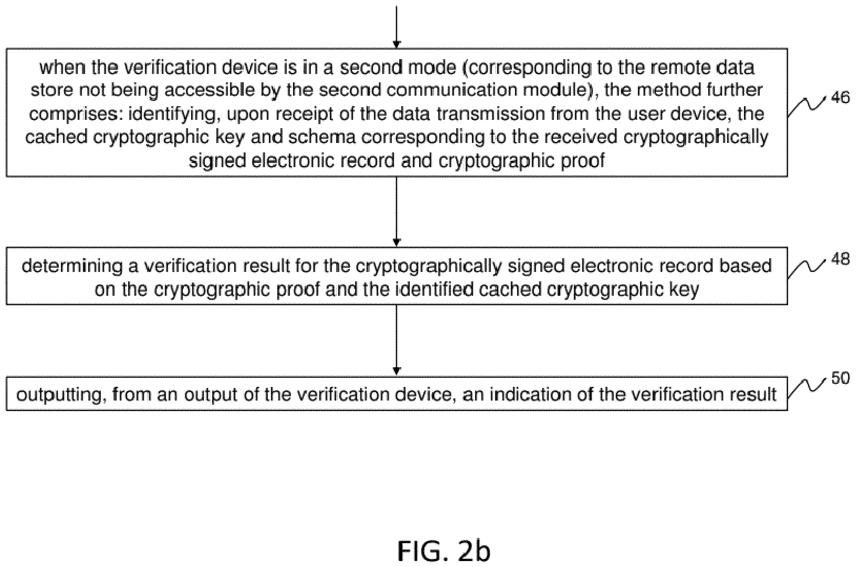

Figures 2a and 2b form a flow diagram showing the steps performed by another embodiment. In step 40, the method comprises caching, at a local data store of the verification device, at least one cryptographic key, for verifying the plurality of user electronic records, and at least one schema indicating the semantics of one or more electronic record data structures corresponding to the plurality of user electronic records.

At step 42, the method comprises receiving, at a first communication module of a verification device, a data transmission from a user device, the data transmission comprising a cryptographically signed electronic record for verification and a corresponding cryptographic proof. In examples of the present disclosure, the data transmission may take place over one of a visually encoded communication path, an audio encoded communication path, or a radio frequency encoded communication path.

Step 44 of the method is relevant when the verification device is in a first mode corresponding to a remote data store being accessible by a second communication module of the verification device. In this first mode, the method further comprises polling the remote data store, by a processor and the second communication module (which is configured to access the remote data store over the internet), to obtain up-to-date copies of the at least one cryptographic key and the at least one schema and to cache these in the local data store.

Step 46 of the method is relevant when the verification device is in a second mode corresponding to the remote data store not being accessible by the second communication module. In this second mode, the method further comprises identifying, upon receipt of the data transmission from the user device, the cached cryptographic key and schema corresponding to the received cryptographically signed electronic record and cryptographic proof.

At step 48 a verification result for the cryptographically signed electronic record is determined based on the cryptographic proof and the identified cached cryptographic key and then at step 50 an indication of the verification result is output from the verification device, for example on a display. In one example, the verification result may be determined by operating on the cryptographic proof with the identified cached cryptographic key. This cryptographic method may include one or more of a digital signature, a cryptographic hash, or by a zero-knowledge proof.

In one example, the cryptographic key may be associated with an expiry time, after which the cryptographic key will be deemed invalid. In such an example, the method may further comprise determining, by the processor, whether the expiry time has elapsed; and further outputting, from the output, an indication that the verification is out of date if the expiry time is determined by the processor to have elapsed.

### Interoperability

In a second part of the present disclosure, methods for combining credentials that have been generated according to different Digitally Verifiable Credential (DVC) standards will be discussed. A DVC standard is a set of rules defining at least the formatting attributes of the credential data in the DVC, for example the encoding method, the format, or the attribute names. Optionally, the DVC standard may also specify characteristics that are required, such as:
- the methodology and processes to issue a DVC;
- the cryptographic methods used to sign and authenticate the DVC; and
- the methodology for establishing a communication channel between the issuing authority 12, the credential holder 14 and/or the credential verifier 18.

The issuing authority 12 may be an authority that distributes credentials in the DVC form to credential holders 14. In a working ecosystem, an issuing authority must be trusted by the DVC verifiers for the distributed DVC to be digitally verified. The issuing authority's public key is public and known from the DVC verifiers.

In one example, the issuing authority may be one or more of the Civil Aviation Authorities across the globe who are working to digitise the licenses of their pilots and enable an internationally interoperable verification of these digitised licenses. This may be with the aim for any verifier, in any airport, to digitally verify the authenticity of a digitally verifiable pilot license, as long as the verifier and the involved issuing authority use the same digitally verifiable credential standard.

A DVC holder is an electronic device holding a DVC that is associated with an individual - the induvial may not be the subject of the DVC, but will be the one presenting the DVC proof to the DVC verifier (inspector device 18) in response to a relevant request from the DVC verifier. The DVC verifier is an individual / device that performs the verification of the DVC, usually on behalf of an authority to which the DVC verifier reports.

Digitally verifiable credentials can be implemented by multiple and different standards which can be incompatible. A verifier may not be able to verify a digitally verifiable credential that has been issued following a different standard than the one that their verifying device is configured to support. Consequently, the selection of a unique standard across the whole community can significantly improve the interoperability of such a system.

Different digitally verifiable credential standards may also have different characteristics. It is typically not possible to alter the configuration or features of a standardised credential without breaking the compliance with the relevant standard. For instance, a given standard may enable the offline verification of the non-revocation status of a credential, while another standards may not have this capability. For instance, the standard selected by the international community of Civil Aviation Authorities (ISO/IEC 18013-5:2021) does not support the offline verification of non-revocation status. Any Civil Aviation Authority wishing to specifically verify the non-revocation status of issued digitally verifiable credentials will not be able to do so without becoming non-compliant with the community standard, which would mean that they would then not be able to verify foreign pilot licenses.

As illustrated above, this is particularly problematic if the standard is an industry agreed standard that certain parties must adhere to. The present inventors have appreciated that features of a secondary credential standard may be incorporated into a primary credential standard, which may be an industry agreed standard, by including the secondary credential data as one of the fields in the primary credential. This may allow the simultaneous use of different standards in single respective credential issuance and verification processes without breaking compliance with a reference standard within the relevant industry. In this manner, a primary credential may benefit from the additional qualities of secondary credential standards without breaking compliance with the primary credential standard.

Existing digitally verifiable credential standards require a set of expected information to be present in a proof request and in a proof; however, they do not typically limit to only this data being present. As such, it can be possible to include additional data for attributes that are optional or otherwise not specified in the standard. Indeed, some credential standards explicitly include optional data fields that are not required by the standard itself (for example in the ISO/IEC 18013-5:2021 standard relating to a mobile driving licence). In this manner, the inventors have appreciated that the secondary credential can be wrapped or encapsulated within the primary credential.

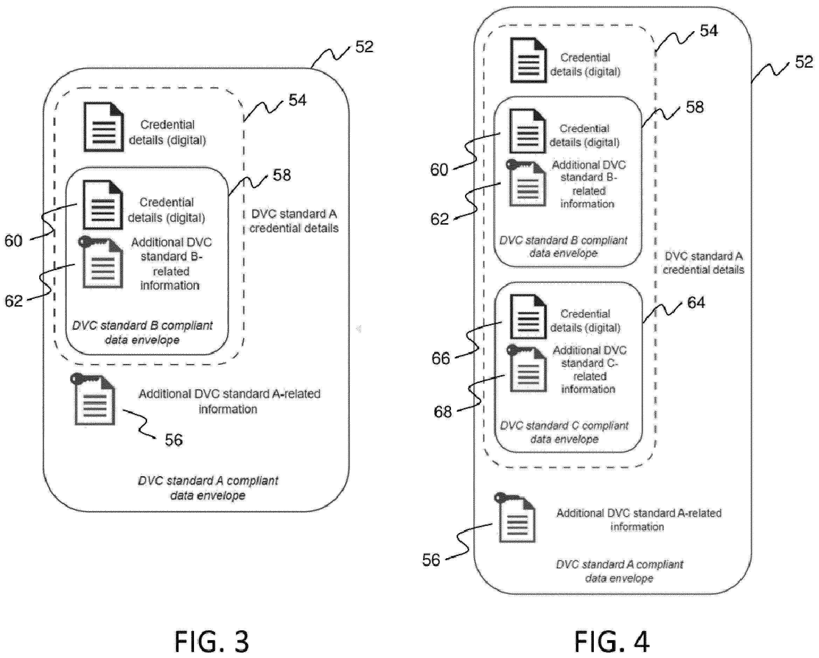

The combination of two or more different credential standards utilises the principle of wrapping a full credential according to a second Digitally Verifiable Credential (DVC) B (e.g. the credential data and the verification-related data wrapped in the credential standard B's data envelope format) within another first DVC A that is compliant with credential standard A. The full DVC B is wrapped within the credential details of DVC standard A, this can be represented as shown in Figure 3.

Figure 3 is a graphical representation of a Digitally Verifiable Credential 52 that has been encoded according to DVC standard A, which comprises credential detail data 54 (the usual details of the credential itself), along with some additional information 56 related to DVC standard A itself (typically the information required for the DVC standard to function, for example, a cryptographic signature, a digital ID of the credential or the individual that the credential relates to, the verification method to be used, and/or the public key of the issuing authority 12, etc.). Together, this may be referred to as a DVC standard A compliant data envelope 52.

By verifying the credential, it can be ensured that the issued data of the credentials has not been tampered and thus is exactly the same as that issued by the issuing authority 12. They also enable the issuing authority which issued the credential to be uniquely identified. These features are typically achieved by using asymmetric cryptography key pairs - i.e. private keys may be used to encrypt data and sign the relevant data, while public keys may be used to decrypt data and verify the associated signature.

Within a field of the credential details 54 of the (primary) DVC standard A compliant data envelope 52, a (secondary) DVC standard B compliant data envelope 58 may be included. The DVC standard B compliant data envelope 58 in turn comprises credential detail data 60 along with some additional information 62 related to DVC standard B itself (typically the information required for the DVC standard B to function).

In some embodiments, more than two credentials and/or credential standards may be combined in this manner. Figure 4 is a graphical representation of another example of a (primary) Digitally Verifiable Credential 52 that has been encoded according to DVC standard A; however, in this example a field of the credential details 54 of the DVC standard A compliant data envelope 52 includes both a (secondary) DVC standard B compliant data envelope 58 (as described above) and also a (secondary) DVC standard C compliant data envelope 64. The DVC standard C compliant data envelope 64 in turn comprises credential detail data 66 along with some additional information 68 related to DVC standard C itself (typically the information required for the DVC standard C to function). It will be appreciated that this could be extrapolated to any n number of credentials being combined, and that some of the credentials may share DVC standards.

The public-private cryptographic key pairs may be different for each credential contained within the primary DVC credential, some of the public-private cryptographic key pairs may be different, or all of the public-private cryptographic key pairs may be the same (which would simplify the management of cryptographic keys).

In the following discussion, the example of three DVC credentials according to three different standards (a primary standard credential and two secondary credentials according to different standards) will be discussed, but it will be appreciated that the skilled person can easily generalise this to any number / combination of DVC standards. The process of issuing the credential will involve the systems 12 of an issuing authority and an electronic device 14 associated with the holder of the credential. Both the system 12 and the electronic device 14 will include a processor that has been configured to process each of the DVC standards involved. It will be appreciated that this could be implemented as a single processor that is configured for use with all of the DVC standards involved, or a plurality of processing units that are each configured for use with one or more of the DVC standards involved.

In the credential issuance process, an input of the issuing authority system 12 will be configured to receive first credential data, second credential data, and third credential data.

A processor of the issuing authority system 12 will then generate a cryptographically signed second credential including the second credential data in accordance with DVC standard B, and generate a cryptographically signed third credential including the third credential data in accordance with DVC standard C. The processor of the issuing authority system 12 can then generate a cryptographically signed first credential including the first credential data as well as the second and third credentials in accordance with DVC standard A.

The cryptographically signed first credential can then be stored in an electronic record database 20 (with the associated public / private key(s) being stored in an issuing authority key store 22) and a copy of the first credential can be sent from an output of the issuing authority system 12 to the electronic device 14 associated with the credential holder.

Once the first credential has been received by the electronic device 14 associated with the credential holder, the electronic device 14 may optionally proceed to decode the received first credential and verify the additional information 56, 62, and 68 related to each of the standards incorporated in the first credential (for example verifying the cryptographic signature of each credential using the public key(s) associated with the relevant issuing authority and credentials).

Once the electronic device 14 has received the first credential, the credential holder may use the electronic device to interact with the inspector device 18 for verification of one or more aspects of the credential data (from the first credential data, second credential data, and/or third credential data) contained within the first credential. The processor 34 of the inspector device 18 may be configured to process only DVC standard A credentials - in this case, the inspector device 18 would be able to decode and verify the first credential data of the first credential (in this sense, the verification process is backwards compatible because compliance with DVC standard A has not been broken). However, by configuring the processor 34 of the inspector device 18 to also process DVC standard B and DVC standard C credentials, the inspector device 18 may also verify the second credential data and the third credential data of the second and third credentials. Again, it will be appreciated that the processor 34 could be implemented as a single processor that is configured for use with all of the supported DVC standards, or a plurality of processing units that are each configured for use with one or more of the DVC standards supported by the inspector device 18.

For a DVC verification to be performed, a communication channel must be established between the DVC inspector device 18, and the electronic device 14 of the credential holder.

The transmission of the DVC is via a digital data exchange, for example using standard Internet protocols such as TCP/IP, HTTP, TLS, etc. In some credential standards, a certain required means of secure communication may be specified, in which case all communication between the parties devices 14, 18 is performed using this communication channel. Once a communication channel has been established, this DVC verification process can be repeated in sequences for any additional data that a DVC verifier may want to verify from the DVC holder. A specified communication channel may also be required for communications between the inspector device 18 and the electronic device 14 of the credential holder. As an example, the ISO/IEC 18013-5:2021 mobile driving licence standard requires communication via one of Bluetooth Low Energy (BLE), Near Field Communication (NFC), or Wifi-Aware (RTM), while AnonCred uses DIDComm.

The verifying process of multiple credential standards requires an innovative combination of respective cryptographic proof requests as well as combinations of cryptographic proofs, as will be discussed below. DVC verification takes place by the inspector device 18 generating a proof request and sending this to the electronic device 14 of the credential holder. The DVC proof request is a digital document generated by the DVC verifier (inspector device 12), and provided to a DVC holder (electronic device 14), to request the verification of a full DVC, or of a subset of the DVC.

The electronic device 14 then generates an associated answer (a proof) that is sent to the inspector device 18 for the verification to be completed. The DVC proof is a digital document generated by the DVC holder (electronic device 14), in response to the DVC proof request. The DVC proof contains the required data for the DVC verifier to verify the DVC in accordance with the verifier's DVC proof request. To execute a DVC verification process involving a plurality of different DVC standards, while using only one sequence of proof request and proof response, multiple DVC proof requests and DVC proofs must be combined.

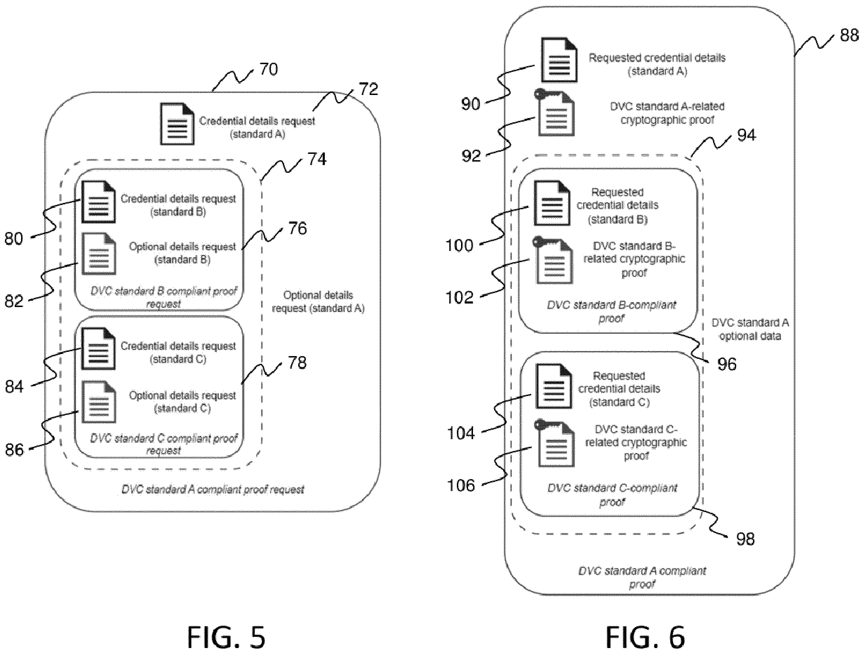

A DVC proof request 70 is graphically illustrated in Figure 5. The DVC proof request 70 comprises a credential details request 72 (which specifies the credentials that the request is about) for DVC standard A, and any optional details request 74 (which are optional fields not needed in the normal DVC standard that the proof request relates to). This proof request is encoded into a format that is compliant with the given DVC standard.

In a similar manner to the encapsulation of further credentials within the optional data of a primary credential, the inventors have appreciated that further proof requests 76, 78 can be encapsulated within the optional details request 74 of a primary proof request 70. The further proof request 76 is compliant with DVC standard B and further comprises a credential details request 80 (which specifies the credentials that the request is about) for DVC standard B, and any optional details request 82 (which are optional fields not needed in the normal DVC standard B). The further proof request 78 is compliant with DVC standard C and further comprises a credential details request 84 (which specifies the credentials that the request is about) for DVC standard C, and any optional details request 86 (which are optional fields not needed in the normal DVC standard C).

In one example, the processor 34 of the inspector device 18 for verifying a DVC receives an indication of one or more first fields of a first credential (associated with DVC standard A), an indication of one or more second fields of a second credential (associated with DVC standard B), and an indication of one or more third fields of a third credential (associated with DVC standard C) to be verified. The processor 34 then generates a standard B compliant proof request 76 and a standard C compliant proof request 78, and then generates a standard A compliant proof request 70 that includes the standard B and C compliant proof requests 76, 78 as optional data. The processor 34 then sends the standard A compliant proof request 70 to the electronic device 14.

The processor of the electronic device 14 parses the proof request 70 and generates a DVC proof response 88. An example DVC proof response 88 is graphically illustrated in Figure 6. The DVC proof response 88 comprises the credential details 90 requested in the proof request, a cryptographic proof 92 for those requested credential details, and any optional data 94 in response to the optional details request 74. This proof response 88 is encoded into a format that is compliant with the given DVC standard (standard A in this example). Again, in a similar manner to the encapsulation of further credentials within the optional data of a primary credential, the inventors have appreciated that further proof responses 96, 98 can be encapsulated within the optional data 94 of a primary proof response 88. The further proof response 96 is compliant with DVC standard B and further comprises a credential details response 100 (which specifies the requested credentials) for DVC standard B, and the associated cryptographic proof 102 for those credential details. The further proof response 98 is compliant with DVC standard C and further comprises a credential details response 104 (which specifies the requested credentials) for DVC standard C, and the associated cryptographic proof 106 for those credential details.

In one example, the processor of the electronic device 14 receives the proof request 70 and decodes it in accordance with DVC standard A to obtain the standard B compliant proof request 76, the standard C compliant proof request 78, and the indication of the requested fields of the first credential 52 associated with DVC standard A. The standard B compliant proof request 76 and the standard C compliant proof request 78 are then further decoded to obtain the respective indications of the requested fields of the second credential 58 associated with DVC standard B and the third credential 64 associated with DVC standard C.

The processor of the electronic device 14 then obtains the relevant credentials from the user electronic record store 26. For example, the processor of the electronic device 14 then obtains relevant data for the requested fields of the second credential 58, elaborates / generates the second proof 102 and the second proof response 96 in accordance with DVC standard B, obtains relevant data for the requested fields of the third credential 64, generates the third proof 106 and the third proof response 98 in accordance with DVC standard C, obtains relevant data for the requested fields of the first credential 52, and then generates the first proof 92 and the first proof response 88 in accordance with DVC standard A such that the first proof response 88 includes the second proof response 96 and the third proof response 98 as discussed above. The processor of the electronic device 14 then sends the first proof response 88 to the inspector device 18.

Once the inspector device 18 has received the first proof response 88, the processor 34 decodes the first proof response 88 in accordance with DVC standard A to obtain the data for requested fields of the first credential 52, the first proof 92 associated with this data, and the second and third proof responses 96, 98. The data for requested fields of the first credential 52 can then be cryptographically validated using the first proof 92 and a corresponding public key associated with the issuing authority and/or DVC standard A to determine a first verification result.

The processor 34 further decodes the second proof response 96 in accordance with DVC standard B to obtain the data for requested fields of the second credential 58 and the second proof 102 associated with this data. The data for requested fields of the second credential 58 can then be cryptographically validated using the second proof 102 and a corresponding public key associated with the issuing authority and/or DVC standard B to determine a second verification result. The processor 34 also further decodes the third proof response 98 in accordance with DVC standard C to obtain the data for requested fields of the third credential 64 and the third proof 106 associated with this data. The data for requested fields of the third credential 64 can then be cryptographically validated using the third proof 106 and a corresponding public key associated with the issuing authority and/or DVC standard C to determine a third verification result. Finally, the first, second, and third verification results (and optionally also the requested data itself) can be output by output 36 of the inspector device 18 - this may for example be via a display of the inspector device, or the verification result could be output by an audio cue.

In this manner, exchange of a single (first) credential 52 may be completed at both the issuance and verification steps with the second credential 58 and third credential 64 being included within the first credential 52. This means that the process of issuing and verifying the first credential 52 can be completed in the known manner despite the presence of the other credentials within the first credential 52.

A benefit of this technique is that, for example, where an industry agreed standard does not support a certain feature (e.g. non-revocation state verification of the credential, or additional credentials relating to training data / experience etc.) this feature can be incorporated into a secondary credential that is then embedded within the data of the first / primary credential. While this does not alter the industry agreed standard to support this feature, it does enable this verification to be included in the same communication payload such that it can be operated on for the verification by a suitably configured verification apparatus, such as inspector device 18.

Taking the example of a digitally verifiable pilot licence credential, the following attributes may be marked as required in one standard:
- title of license;
- type of license (e.g. PPL, CPL, ATPL(A), etc.);
- date of initial issue;
- country code of the country in which the license was issued;
- state of issue for the pilot licence;
- license number;
- last name of the pilot to whom the license belongs;
- first name of the pilot to whom the license belongs;
- date of birth of the pilot to whom the license belongs;
- pilot nationality;
- name of the licence issuing authority;
- validity attribute - comments on the validity of the license, when it comes to elements that are not included in the license;
- languages of radiotelephony privilege; and
- relevant class of aircraft, type rating or instrument rating (e.g. "A320", "Aerobatic", "Night", "IR(A)").

Conversely, the following attributes might be optionally included in a digitally verifiable pilot licence credential:
- postal address of the pilot to whom the license belongs;
- portrait (identity picture for pilot identification);
- licence remarks (e.g. language proficiency);
- validity boundary of the corresponding aircraft class / type rating / instrument rating;
- Instrument rating valid until; and
- remarks / restrictions.

An example pilot licence credential may be provided in the following format:

```
       {
        "stateOflssue": "France",
        "licenseNumber": "454145841945",
        "lastName": "Dupont",
        "firstName": "Martin",
        "dateOfBirth": "1982-10-04",
        "address": "Rue de la Gare, 75010 Paris, France",
        "nationality": "France",
        "issuingCompetentAuthority": "DGAC",
        "titleOfLicense": "ATPL(A)",
        "dateOflnitiallssue": "2018-05-04",
        "countryCode": "FR",
        "validity": "The privileges of the licence shall be exercised only if the holder has a
       valid medical certificate for the required privilege. A document containing a photo
        shall be carried for the purpose of identifying the license holder.",
        "radiotelephonyPrivilege": "The holder of this licence has demonstrated competence
       to operate R/T equipment on board aircraft.",
        "remarks": "None",
        "privileges": [
       {
        "classTypelr": "A320",
        "validUntil": "2023-11-30T00:00:00.000Z",
        "validUntillr": "2023-10-30T00:00:00.000Z",
        "remarksRestrictions": "LV"
       }
       ]
       }
```

As discussed above, a pilot licence is simply one example of a digitally verifiable credential that could be generated and processed in accordance with the present disclosure. It will be appreciated that the same teaching could be applied to an Air Traffic Controller's licence, a maintenance engineer's licence, a boatmasters' licence, a driving licences and the like.

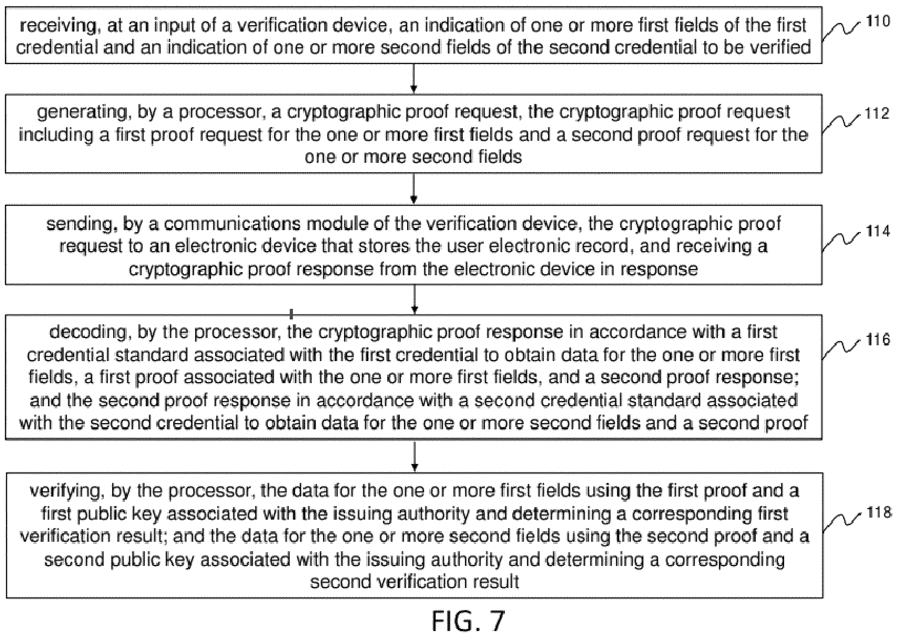

Figure 7 is a flow diagram showing the steps performed by another embodiment for verifying a user electronic record. In step 110, the method comprises receiving, at an input of a verification device, an indication of one or more first fields of the first credential and an indication of one or more second fields of the second credential to be verified.

At step 112, the method comprises generating, by a processor, a cryptographic proof request, the cryptographic proof request including a first proof request for the one or more first fields and a second proof request for the one or more second fields.

At step 114, the method comprises sending, by a communications module of the verification device, the cryptographic proof request to an electronic device that stores the user electronic record, and receiving a cryptographic proof response from the electronic device in response.

At step 116, the method comprises decoding, by the processor, the cryptographic proof response in accordance with a first credential standard associated with the first credential to obtain data for the one or more first fields, a first proof associated with the one or more first fields, and a second proof response; and the second proof response in accordance with a second credential standard associated with the second credential to obtain data for the one or more second fields and a second proof.

At step 118, the method comprises verifying, by the processor, the data for the one or more first fields using the first proof and a first public key associated with the issuing authority and determining a corresponding first verification result; and the data for the one or more second fields using the second proof and a second public key associated with the issuing authority and determining a corresponding second verification result. The method may further comprise outputting, by an output of the verification device, the first and second verification results.

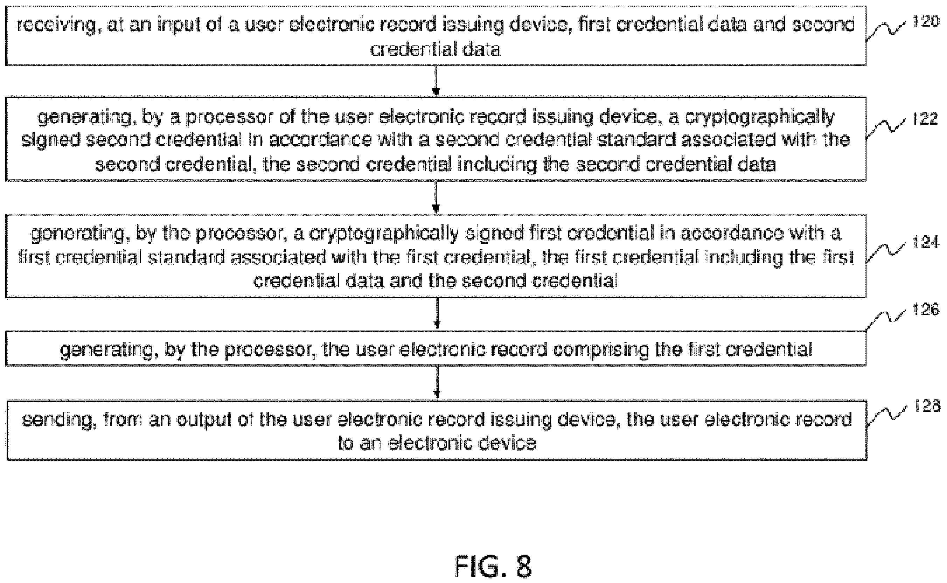

Figure 8 is a flow diagram showing the steps performed by another embodiment for generating a user electronic record. In step 120, the method comprises receiving, at an input of a user electronic record issuing device, first credential data and second credential data.

At step 122, the method comprises generating, by a processor of the user electronic record issuing device, a cryptographically signed second credential in accordance with a second credential standard associated with the second credential, the second credential including the second credential data.

At step 124, the method comprises generating, by the processor, a cryptographically signed first credential in accordance with a first credential standard associated with the first credential, the first credential including the first credential data and the second credential.

At step 126, the method comprises generating, by the processor, the user electronic record comprising the first credential. Finally, at step 128, the method comprises sending, from an output of the user electronic record issuing device, the user electronic record to an electronic device.

For completeness, it is noted that the flowcharts of Figures 2a, 2b, 6, and 7 illustrate the operation of an example implementation of a method according to the present disclosure. Each block in the flowcharts may represent a module comprising one or more executable computer instructions, or a portion of an instruction, for implementing the relevant logical function specified in the block. The order of blocks in the Figures is only intended to be illustrative of an example. In alternative implementations, the logical functions illustrated in particular blocks may occur out of the order noted in Figures. For example, the processes associated with two blocks may be carried out simultaneously or, depending on the functionality, in the reverse order. Moreover, each block in the flowchart may be implemented in software, hardware or a combination of software and hardware.

As will be appreciated by the skilled person, the subject matter described herein may be embodied in whole or in part as a method, a system, or a computer program product including computer readable instructions. Accordingly, the subject matter of the present disclosure may take the form of an entirely hardware embodiment, an entirely software embodiment, or an embodiment combining software, firmware, hardware and/or any other suitable approach or apparatus.

Any computer readable program instructions may be stored on a non-transitory, tangible computer readable medium. The computer readable storage medium may include one or more of an electronic storage device, a magnetic storage device, an optical storage device, an electromagnetic storage device, a semiconductor storage device, a portable computer disk, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk.

Embodiments of the present disclosure may be described with reference to the following numbered clauses, with preferred features laid out in the dependent clauses:
Clause 1. An apparatus for verifying a user electronic record, wherein the user electronic record is a cryptographically signed electronic record generated by an issuing authority that comprises a first credential and a second credential, the apparatus comprising:
   an input configured to receive an indication of one or more first fields of the first credential and an indication of one or more second fields of the second credential to be verified;
   a processor configured to generate a cryptographic proof request, the cryptographic proof request including a first proof request for the one or more first fields and a second proof request for the one or more second fields;
   a communications module configured to send the cryptographic proof request to an electronic device that stores the user electronic record, and configured to receive a cryptographic proof response from the electronic device in response; and

   an output configured to output a first verification result and a second verification result;
   wherein the processor is further configured to:
      decode the cryptographic proof response in accordance with a first credential standard associated with the first credential to obtain data for the one or more first fields, a first proof associated with the one or more first fields, and a second proof response;
      verify the data for the one or more first fields using the first proof and a first public key associated with the issuing authority and determining the corresponding first verification result;
      decode the second proof response in accordance with a second credential standard associated with the second credential to obtain data for the one or more second fields and a second proof; and
      verify the data for the one or more second fields using the second proof and a second public key associated with the issuing authority and determining the corresponding second verification result.
Clause 2. The apparatus of clause 1, wherein the cryptographic proof request includes the second proof request as optional data within the first proof request.
Clause 3. The apparatus of clause 1 or 2, wherein the first public key and the second public key are the same.
Clause 4. The apparatus of any one of clauses 1 to 3, wherein the cryptographic proof request further includes a third proof request for one or more third fields corresponding to a third credential, and wherein the processor is further configured to:
   obtain a third proof response by decoding the cryptographic proof response;
      decode the third proof response in accordance with a third credential standard associated with the third credential to obtain data for the one or more third fields and a third proof; and
      verify the data for the one or more third fields using the third proof and a third public key associated with the issuing authority and determining a corresponding third verification result;
   wherein the output is further configured to output the third verification result.
Clause 5. The apparatus of any one of clauses 1 to 4, wherein the output comprises a display, and wherein the output is configured to provide the indication of the verification result as a visual indication output to the display.
Clause 6. The apparatus of any one of clauses 1 to 5, wherein the user electronic record is an electronic pilot licence, and the electronic device is a pilot device.
Clause 7. A system for verifying a user electronic record, wherein the user electronic record is a cryptographically signed electronic record generated by an issuing authority that comprises a first credential and a second credential, the system comprising:
   an apparatus according to any one of clauses 1 to 6; and
   an electronic device that stores the user electronic record, the electronic device comprising:
      a data store configured to store the first credential and the second credential;
      a further input configured to receive the cryptographic proof request;
      a further processor figured to decode the cryptographic proof request, obtain relevant data for the second credential, generate the second proof and the second proof response in accordance with the second credential standard associated with the second credential, obtain relevant data for the first credential, and generate the first proof and the cryptographic proof response in accordance with the first credential standard associated with the first credential, wherein the cryptographic proof response comprises the relevant data for the first credential, the first proof, and the second proof response; and
      a further output configured to send the cryptographic proof response to the input of the apparatus.
Clause 8. A method for verifying a user electronic record, wherein the user electronic record is a cryptographically signed electronic record generated by an issuing authority that comprises a first credential and a second credential, the method comprising:
   receiving, at an input of a verification device, an indication of one or more first fields of the first credential and an indication of one or more second fields of the second credential to be verified;
   generating, by a processor, a cryptographic proof request, the cryptographic proof request including a first proof request for the one or more first fields and a second proof request for the one or more second fields;
   sending, by a communications module of the verification device, the cryptographic proof request to an electronic device that stores the user electronic record, and receiving a cryptographic proof response from the electronic device in response;
   decoding, by the processor, the cryptographic proof response in accordance with a first credential standard associated with the first credential to obtain data for the one or more first fields, a first proof associated with the one or more first fields, and a second proof response; verifying, by the processor, the data for the one or more first fields using the first proof and a first public key associated with the issuing authority and determining a corresponding first verification result;
   decoding, by the processor, the second proof response in accordance with a second credential standard associated with the second credential to obtain data for the one or more second fields and a second proof;
   verifying, by the processor, the data for the one or more second fields using the second proof and a second public key associated with the issuing authority and determining a corresponding second verification result; and
   outputting, by an output of the verification device, the first and second verification results.
Clause 9. The method of clause 8, wherein the cryptographic proof request includes the second proof request as optional data within the first proof request.
Clause 10. The method of clause 8 or 9, wherein the first public key and the second public key are the same.
Clause 11. The method of any one of clauses 8 to 10, wherein the cryptographic proof request further includes a third proof request for one or more third fields corresponding to a third credential, the decoding of the cryptographic proof response further obtains a third proof response, and the method further comprises:
   decoding, by the processor, the third proof response in accordance with a third credential standard associated with the third credential to obtain data for the one or more third fields and a third proof;
   verifying, by the processor, the data for the one or more third fields using the third proof and a third public key associated with the issuing authority and determining a corresponding third verification result; and
   outputting, by an output of the verification device, the third verification result.
Clause 12. The method of any one of clauses 8 to 11, wherein outputting the verification result comprises outputting the indication of the verification result as a visual indication on a display.
Clause 13. The method of any one of clauses 8 to 12, wherein the user electronic record is an electronic pilot licence, and the electronic device is a pilot device.
Clause 14. The method of any one of clauses 8 to 13, further comprising, at a further processor of the electronic device:
   decoding the cryptographic proof request;
   obtaining relevant data for the second credential;
   generating the second proof and the second proof response in accordance with the second credential standard associated with the second credential;
   obtaining relevant data for the first credential; and
   generating the first proof and the cryptographic proof response in accordance with the first credential standard associated with the first credential, wherein the cryptographic proof response comprises the relevant data for the first credential, the first proof, and the second proof response.
Clause 15. An apparatus for generating a user electronic record, wherein the user electronic record is a cryptographically signed electronic record comprising a first credential and a second credential, the apparatus comprising:
   an input configured to receive first credential data and second credential data;
   a processor configured to generate a cryptographically signed second credential in accordance with a second credential standard associated with the second credential, the second credential including the second credential data; to generate a cryptographically signed first credential in accordance with a first credential standard associated with the first credential, the first credential including the first credential data and the second credential; and to generate the user electronic record comprising the first credential; and
   an output configured to output the user electronic record to an electronic device.
Clause 16. The apparatus of clause 15, wherein the first credential further includes first additional information relating to the first credential standard, and the second credential further includes second additional information relating to the second credential standard
Clause 17. A method for generating a user electronic record, wherein the user electronic record is a cryptographically signed electronic record comprising a first credential and a second credential, the method comprising:
   receiving, at an input of a user electronic record issuing device, first credential data and second credential data;
   generating, by a processor of the user electronic record issuing device, a cryptographically signed second credential in accordance with a second credential standard associated with the second credential, the second credential including the second credential data;
   generating, by the processor, a cryptographically signed first credential in accordance with a first credential standard associated with the first credential, the first credential including the first credential data and the second credential;
   generating, by the processor, the user electronic record comprising the first credential; and
   sending, from an output of the user electronic record issuing device, the user electronic record to an electronic device.
Clause 18. The method of clause 17, wherein the first credential further includes first additional information relating to the first credential standard, and the second credential further includes second additional information relating to the second credential standard.

## Claims

1. An apparatus for verifying a user electronic record, wherein the user electronic record is a cryptographically signed electronic record generated by an issuing authority that comprises a first credential and a second credential, the apparatus comprising:
an input configured to receive an indication of one or more first fields of the first credential and an indication of one or more second fields of the second credential to be verified;
a processor configured to generate a cryptographic proof request, the cryptographic proof request including a first proof request for the one or more first fields and a second proof request for the one or more second fields;
a communications module configured to send the cryptographic proof request to an electronic device that stores the user electronic record, and configured to receive a cryptographic proof response from the electronic device in response; and
an output configured to output a first verification result and a second verification result;
wherein the processor is further configured to:
decode the cryptographic proof response in accordance with a first credential standard associated with the first credential to obtain data for the one or more first fields, a first proof associated with the one or more first fields, and a second proof response;
verify the data for the one or more first fields using the first proof and a first public key associated with the issuing authority and determining the corresponding first verification result;
decode the second proof response in accordance with a second credential standard associated with the second credential to obtain data for the one or more second fields and a second proof; and
verify the data for the one or more second fields using the second proof and a second public key associated with the issuing authority and determining the corresponding second verification result.

2. The apparatus of claim 1, wherein the cryptographic proof request includes the second proof request as optional data within the first proof request.

3. The apparatus of claim 1 or 2, wherein the first public key and the second public key are the same.

4. The apparatus of any one of claims 1 to 3, wherein the cryptographic proof request further includes a third proof request for one or more third fields corresponding to a third credential, and wherein the processor is further configured to:
obtain a third proof response by decoding the cryptographic proof response;
decode the third proof response in accordance with a third credential standard associated with the third credential to obtain data for the one or more third fields and a third proof; and
verify the data for the one or more third fields using the third proof and a third public key associated with the issuing authority and determining a corresponding third verification result;
wherein the output is further configured to output the third verification result.

5. The apparatus of any one of claims 1 to 4, wherein the output comprises a display, and wherein the output is configured to provide the indication of the verification result as a visual indication output to the display.

6. The apparatus of any one of claims 1 to 5, wherein the user electronic record is an electronic pilot licence, and the electronic device is a pilot device.

7. A system for verifying a user electronic record, wherein the user electronic record is a cryptographically signed electronic record generated by an issuing authority that comprises a first credential and a second credential, the system comprising:
an apparatus according to any one of claims 1 to 6; and
an electronic device that stores the user electronic record, the electronic device comprising:
a data store configured to store the first credential and the second credential;
a further input configured to receive the cryptographic proof request;
a further processor figured to decode the cryptographic proof request, obtain relevant data for the second credential, generate the second proof and the second proof response in accordance with the second credential standard associated with the second credential, obtain relevant data for the first credential, and generate the first proof and the cryptographic proof response in accordance with the first credential standard associated with the first credential, wherein the cryptographic proof response comprises the relevant data for the first credential, the first proof, and the second proof response; and
a further output configured to send the cryptographic proof response to the input of the apparatus.

8. A method for verifying a user electronic record, wherein the user electronic record is a cryptographically signed electronic record generated by an issuing authority that comprises a first credential and a second credential, the method comprising:
receiving, at an input of a verification device, an indication of one or more first fields of the first credential and an indication of one or more second fields of the second credential to be verified;
generating, by a processor, a cryptographic proof request, the cryptographic proof request including a first proof request for the one or more first fields and a second proof request for the one or more second fields;
sending, by a communications module of the verification device, the cryptographic proof request to an electronic device that stores the user electronic record, and receiving a cryptographic proof response from the electronic device in response;
decoding, by the processor, the cryptographic proof response in accordance with a first credential standard associated with the first credential to obtain data for the one or more first fields, a first proof associated with the one or more first fields, and a second proof response;
verifying, by the processor, the data for the one or more first fields using the first proof and a first public key associated with the issuing authority and determining a corresponding first verification result;
decoding, by the processor, the second proof response in accordance with a second credential standard associated with the second credential to obtain data for the one or more second fields and a second proof;
verifying, by the processor, the data for the one or more second fields using the second proof and a second public key associated with the issuing authority and determining a corresponding second verification result; and
outputting, by an output of the verification device, the first and second verification results.

9. The method of claim 8, wherein the cryptographic proof request includes the second proof request as optional data within the first proof request.

10. The method of claim 8 or 9, wherein the cryptographic proof request further includes a third proof request for one or more third fields corresponding to a third credential, the decoding of the cryptographic proof response further obtains a third proof response, and the method further comprises:
decoding, by the processor, the third proof response in accordance with a third credential standard associated with the third credential to obtain data for the one or more third fields and a third proof;
verifying, by the processor, the data for the one or more third fields using the third proof and a third public key associated with the issuing authority and determining a corresponding third verification result; and
outputting, by an output of the verification device, the third verification result.

11. The method of any one of claims 8 to 10, wherein outputting the verification result comprises outputting the indication of the verification result as a visual indication on a display.

12. The method of any one of claims 8 to 11, further comprising, at a further processor of the electronic device:
decoding the cryptographic proof request;
obtaining relevant data for the second credential;
generating the second proof and the second proof response in accordance with the second credential standard associated with the second credential;
obtaining relevant data for the first credential; and
generating the first proof and the cryptographic proof response in accordance with the first credential standard associated with the first credential, wherein the cryptographic proof response comprises the relevant data for the first credential, the first proof, and the second proof response.

13. An apparatus for generating a user electronic record, wherein the user electronic record is a cryptographically signed electronic record comprising a first credential and a second credential, the apparatus comprising:
an input configured to receive first credential data and second credential data;
a processor configured to generate a cryptographically signed second credential in accordance with a second credential standard associated with the second credential, the second credential including the second credential data; to generate a cryptographically signed first credential in accordance with a first credential standard associated with the first credential, the first credential including the first credential data and the second credential; and to generate the user electronic record comprising the first credential; and
an output configured to output the user electronic record to an electronic device.

14. The apparatus of claim 13, wherein the first credential further includes first additional information relating to the first credential standard, and the second credential further includes second additional information relating to the second credential standard

15. A method for generating a user electronic record, wherein the user electronic record is a cryptographically signed electronic record comprising a first credential and a second credential, the method comprising:
receiving, at an input of a user electronic record issuing device, first credential data and second credential data;
generating, by a processor of the user electronic record issuing device, a cryptographically signed second credential in accordance with a second credential standard associated with the second credential, the second credential including the second credential data;
generating, by the processor, a cryptographically signed first credential in accordance with a first credential standard associated with the first credential, the first credential including the first credential data and the second credential;
generating, by the processor, the user electronic record comprising the first credential; and
sending, from an output of the user electronic record issuing device, the user electronic record to an electronic device.
